# EUROPÄISCHE PATENTSCHRIFT

(11) **EP 1 553 192 B1**
(45) Veröffentlichungstag und Bekanntmachung des Hinweises auf die Patenterteilung: **28.07.2010**
(21) Anmeldenummer: 04028237.8
(22) Anmeldetag: 29.11.2004
(51) Int. Cl.: F27B 3/20, F27B 3/22, F27D 1/12

(54) **Aufnahmevorrichtung für Injektoren in einem Schmelzofen**
Mounting device for an burner or lance in a melting furnace
Dispositif de montage pour lance ou brûleur dans un four de fonte.

(30) Priorität: 29.12.2003 DE 10361753
(43) Veröffentlichungstag der Anmeldung: 13.07.2005
(73) Patentinhaber: SMS Siemag AG, 40237 Düsseldorf (DE)
(72) Erfinder: Schubert, Manfred, 46147 Oberhausen (DE); Mörke, Rolf, 46149 Oberhausen (DE)
(74) Vertreter: Klüppel, Walter

(56) Entgegenhaltungen:
- WO-A-01/60123
- GB-A- 734 077
- GB-A- 2 280 501

## Beschreibung

Die Erfindung betrifft eine Vorrichtung zur Aufnahme mindestens eines Injektors, mit dem Medien, wie Sauerstoff und/oder kohlenhaltige Brennstoffe, in einen Schmelzofen, insbesondere einen Elektrolichtbogenofen, eingebracht werden. Hierbei ist der jeweilige Injektor mittels der Aufnahmevorrichtung geschützt an oder in der Ofenwand des Schmelzofens angeordnet.

Es ist bekannt, in Elektrolichtbogenöfen bei der Herstellung von Stahl Sauerstoff und Kohle in den Ofenraum einzubringen. Dies geschieht üblicherweise mittels Lanzen durch die Schlackentür oder auch mittels in das Wandpanel des Obergefäßes eingebauter Module. Der Einsatz von Türlanzen bedeutet einen Energieverlust durch Öffnen der Schlackentür. Der Einsatz von Modulen in das Obergefäß bedingt einen großen Abstand zum Stahlbad, verbunden mit einem hohen Verbrauch von Sauerstoff und Kohle. Aufgrund des großen Strahlweges ist zudem der Verschleiss des Feuerfest-Materials relativ hoch.

Um den Abstand zum Stahlbad zu verringern, ist in der US 6,289,035 B1 vorgeschlagen worden, den Injektor in einem Befestigungsblock an dem Oberteil eines Elektrolichtbogenofen zu befestigen und somit den Positionierungsort mehr in den Ofenraum zu verschieben. Der bekannte Befestigungsblock ist von seiner Grundkonstruktion einstückig und besteht aus einem eckigen Block aus Gusseisen. Ein solcher Block wird mit seiner Unterseite auf dem Ofenunterteil positioniert und zwar auf einer Stufe zum Ofenoberteil, die sich durch die Auskleidung des Unterteils des Ofens mit Feuerfestmaterial ergibt. In den Befestigungsblock ist eine Öffnung für den jeweiligen Injektor eingegossen, der den Positionierungswinkel des Injektors vorgibt. Der Injektor ragt aus dem Block soweit hervor, dass das darunter angeordnete Feuerfest-Material nicht im Strahlwinkel des Injektors liegt. Im Austrittsbereich des Injektors umfasst der Block eine Ausnehmung, in die ein mediumdurchflossenes Kühlpanel eingesetzt ist, das ebenfalls aus Gusseisen oder aus Kupfer besteht. Der obere Teil des massiven Blocks ist als schräges Vordach mit Nuten ausgebildet, die Schlacketeile zurückhalten sollen, um so eine Schutzschicht für den einem hohen Verschleiss ausgesetzten Block zu bilden.

GB-A-2 280 501 zeigt eine Aufnahmevorrichtung die einteilig aus einem Block besteht.

Ausgehend hiervon liegt der Erfindung die Aufgabe zugrunde, eine solche Vorrichtung zur Aufnahme eines Injektors dahingehend weiterzubilden, dass er hinsichtlich seiner Anordnung im Ofen variabler und die Wartung des einem hohen Verschleiss unterliegenden Bauteils einfacher wird.

Diese Aufgabe wird durch Vorrichtungen mit den Merkmalen des Anspruchs 1 gelöst. Vorteilhafte Weiterentwicklungen sind in den Unteransprüchen beschrieben.

Kerngedanke der Erfindung ist, dass die Aufnahmevorrichtung, nachfolgend als Injektorbox bezeichnet, nicht wie im Stand der Technik einteilig als Block, sondern mehrteilig ausgebildet ist, d.h. aus mehreren Einzelteilen besteht.

Die Injektorbox umfasst hierbei einen unteren Bodenteil, einem oberen Dachteil und Seitenwände. Diese vier Bauteile sind jeweils unabhängig und derart miteinander verbunden, dass sie jeweils separat voneinander auswechselbar sind. Sollte es zum Beispiel durch den Chargiervorgang von Schrott oder Zusätzen in den Schmelzofen oder beim Betrieb zu Beschädigungen der Injektorbox gekommen sein, brauchen nur die beschädigten Teile ausgewechselt werden. Beispielsweise kann dann ein beschädigtes oder verschlissenes Dachteil ohne Ausbau des Bodenteils und der Seitenwände ersetzt werden.

Die Injektorbox kann als komplett vormontierte Einheit an die Ofenwand oder in ein Wandpanel eingebaut werden. Die Injektorbox erlaubt zudem, dass die jeweiligen Injektoren sich von der Schmelzofenaußenseite bzw. Gefäßaußenseite ein- und ausbauen lassen.

Vorzugsweise wird diese module Aufbauweise durch eine Tragkonstruktion erreicht, an der die Bestandteile der Injektorbox angeordnet sind.

Das Bodenteil bzw. die Grundplatte ist vorzugsweise aus einer massiven Kupferplatte gefertigt, die wärmetechnische Vorteile besitzt. Am Bodenteil sind die Injektoren in Aufnahmen, beispielsweise in Flanschanschlüssen, befestigt.

Das obere Dachteil wird vorzugsweise aus Stahl gefertigt, um evtl. Beschädigungen durch das Chargieren vorzubeugen. Nach einer besonders vorteilhaften Variante ist das Dachteil als Dachpanel aus einer Rohr-Rohr-Konstruktion ausgebildet mit zur Ofenwand geneigt und in Richtung Ofenmitte verlaufenden Rohren, um das Rutschen des Schrotts bzw. des Chargiermaterial zu unterstützen. Auftreffendes Chargiergut kann somit besser abgewiesen werden. Das Dachteil kann nach einer anderen Ausführungsform auch als wassergekühlte Platte ausgebildet sein.

Die Seitenwände können aus massiven Kupferplatten oder aus Stahlplatten hergestellt sein. Sie weisen vorzugsweise an ihrer Außenseite Nuten zur besseren Anhaftung von Schlacke und damit aus Schutzgründen auf.

Alle Teile sind vorzugsweise wassergekühlt und zwar insbesondere jeweils unabhängig mit einem separaten Kühlkreislauf. Die Kühlwasserversorgung erfolgt aus dem Wasserverteiler des Obergefäßes. Im Falle der Ausbildung als massive Kupfer- oder Stahlplatte sind Bohrungen oder Kanäle in die Platte eingebracht, die vom Kühlwasser durchflossen werden.

Wie oben ausgeführt, ist die Injektorbox am Obergefäß des Schmelzofens mittels einer Tragkonstruktion befestigt. Wandpanel und Injektorbox werden gemeinsam in den Wasserverteiler des Obergefäßes eingehängt. Die Tragkonstruktion wird an den Wasserverteiler des Obergefäßes verschweißt und stützt sich ggfs. auf dem Unterteil des Ofens ab. Somit sind Lageänderungen, welche sich dadurch ergeben könnten, wenn die Injektorbox wie beim Stand der Technik auf den Rand der Ausmauerung gestellt würde, die in ihrer Höhe variieren kann, ausgeschlossen. Es empfiehlt sich, dass das Dachteil bzw. das Dachpanel über eine Keilverbindung mit dieser Tragkonstruktion lösbar verbunden ist, um das Dachpanel im Falle einer Beschädigung leicht entkoppeln und wechseln zu können.

Das Dachteil kann mit den Seitenwänden abschließen. Es empfiehlt sich, dass das Dachteil seitlich über die Seitenwände übersteht. Damit können Beschädigungen der Seitenwände, zum Beispiel beim Chargieren, verringert werden.

Durch die Injektorbox wird der jeweilige Injektor näher an die Schmelze positioniert. Durch die gewählte Anordnung werden die Strahllängen der einzusetzenden Medien zur Badoberfläche (bzw. zur Schaumschlacke) verkürzt. Die Einbaulage des jeweiligen Injektors wird vorteilhafterweise so gewählt, dass der Injektor bzw. Teil von diesem nicht über das Bodenteil hinausragen, sondern der Strahl durch eine entsprechende Öffnung im Bodenteil in Richtung Schmelze gerichtet ist. Mögliche Beschädigungen des Injektorkopfes werden somit vermieden.

Neben den Vorteilen von kurzen Strahllängen für beispielsweise die Sauerstoff- und Kohlenstoffeinblasung, neben einem geringeren Verbrauch von Sauerstoff und Kohlenstoff durch eine optimale nahe Positionierung zum Stahlbad, einer Optimierung der Schaumschlackenbildung durch effektives Einbringen von Sauerstoff und Kohlenstoff und kürzeren Einschaltzeit für die Injektoren zeigt die vorgeschlagene mehrteilige Injektorbox den Vorteil einer einfachen Montage und Demontage durch den Einbau im Wandpanel auf. Die Injektorbox ist wartungsfreundlich, weil sie modulweise ersetzt werden kann und weil sie von der Ofenaußenseite erreichbar ist. Aufgrund der Ausbildung der Bodenplatte mit Aufnahmen können wahlweise ein oder zwei oder mehrere Injektoren eingebaut werden.

Aufgrund der Tragkonstruktion für die Injektorbox und der vorgeschlagenen Positionierung der Injektoren in der Box wird erreicht, dass die Strahlgänge nicht auf das Feuerfest-Material gerichtet sind, so dass dieses weniger stark verschleisst. Mittels der Tragkonstruktion kann die Injektorbox mit ausreichendem Abstand zur Feuerfest-Material der Ausmauerung des unteren Ofens positioniert werden. Insgesamt wird die Produktivität und die Betriebssicherheit des Schmelzofen erhöht. Die Wartungskosten und die Herstellungskosten für die Injektorenboxen werden reduziert.

Die Injektorbox findet insbesondere Einsatz im Elektrolichtbogenofen für die Erzeugung von Schaumschlacken bei der Produktion von Kohlenstoffstahl.

Weitere Einzelheiten und Vorteile der Erfindung ergeben sich aus den Unteransprüchen und aus der nachfolgenden Beschreibung, in der die in den Figuren dargestellten Ausführungsformen der Erfindung näher erläutert werden. Es zeigen:
- Fig. 1: einen Längsschnitt einer an der Ofenwand angeordneten Injektorbox;
- Fig. 2: die Ansicht in Richtung A der Fig. 1 auf die in den Ofenraum weisende Seite der Injektorbox;
- Fig. 3: einen Längsschnitt der Injektorbox mit Tragkonstruktion.

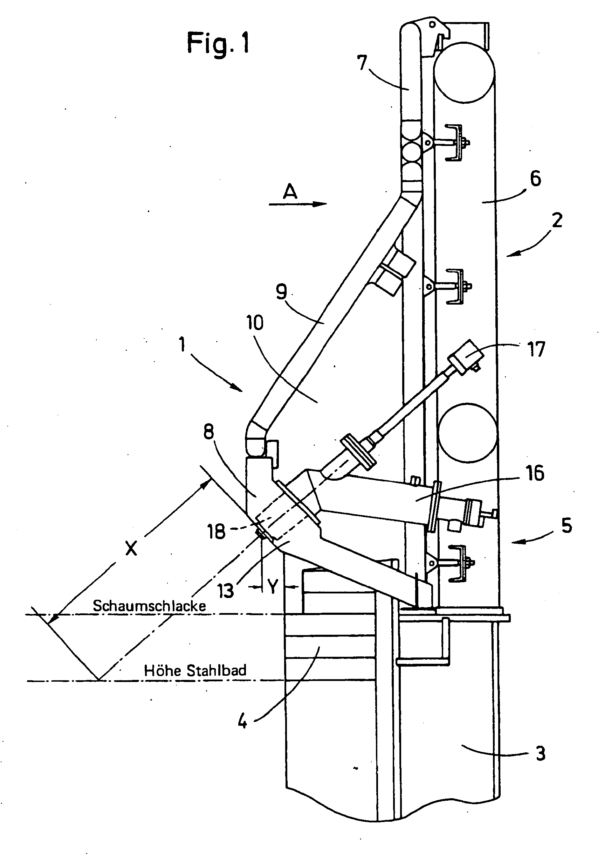

Fig. 1 zeigt die Aufnahmevorrichtung 1 nach der Erfindung, nachfolgend Injektorbox genannt, die an der Ofenwand 2 eines Schmelzofens, hier eines Elektrolichtbogenofens, angeordnet ist. Der Schmelzofen besteht zum einen aus einem Untergefäß 3, das über die Höhe des Schmelzbades bzw. Stahlbades hinaus bis zur Höhe der Schaumschlacke mit einer Feuerfest-Auskleidung 4 versehen ist. Zum anderen besteht der Schmelzofen aus dem Obergefäß 5 mit einer Rohr-Wandkonstruktion, die eine Rohrkonstruktion zur Wasserverteilung (Wasserverteiler 6) und ein Wandpanel 7 umfasst.

Die Injektorbox ist mehrteilig aufgebaut und setzt sich aus einem Bodenteil 8, einem Dachteil 9 und zwei Seitenwänden 10, 11 (verdeckt) zusammen. Bodenteil 8, Dachteil 9 und die beiden Seitenwände 10, 11 sind lösbar miteinander verbunden.

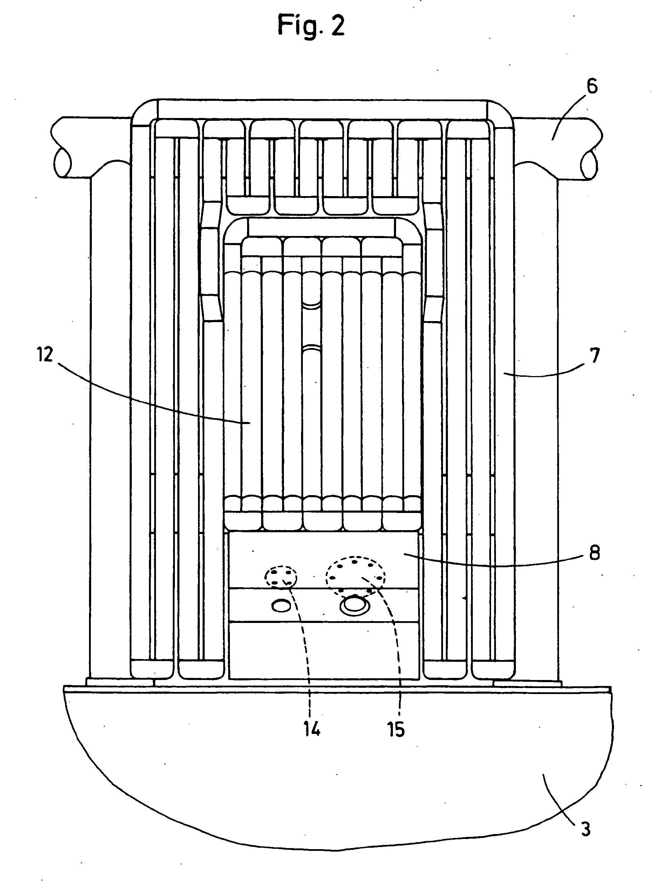

Das Dachteil 9 ist ebenso wie das Wandpanel 7 als Panel bzw. Rohrkonstruktion ausgebildet, wobei die wasserdurchflossenen Rohre 12 bzw. Rohrleitungen des Dachpanels mäandrierend nebeneinander angeordnet sind (vgl. Fig. 2). Das Dachpanel ragt schräg vorspringend in den Ofenraum hinein. Den Boden bildet das sich ebenfalls in den Ofenraum ragende Bodenteil 8 bzw. eine massive Bodenplatte, die mit dem Dachpanel abschließt und sich rückseitig an dem Untergefäß abstützt. In einem verstärkten Plattenbereich 13 sind Durchlassöffnungen 14, 15 bzw. Aufnahmen für ― bei diesem Ausführungsbeispiel ― zwei Injektoren 16, 17 für Sauerstoff und Kohlenstoff ― eingebracht, deren Injektorkopf 18 mit der Durchlassöffnung 14, 15 abschließt. Aufgrund der in den Ofenraum hineinragenden Konstruktion der Injektorbox können die Injektoren 16, 17 näher am Stahlbad-Niveau bzw. Schaumschlackenniveau angeordnet werden, hier durch den Abstand "X" gekennzeichnet. Der Abstand "Y" verdeutlicht, dass der Injektorkopf 18 entfernt vom Feuerfest-Material bzw. der Auskleidung 4 angeordnet ist, so dass Verschleisserscheinungen des Feuerfest-Materials reduziert werden.

Die Fig. 2 zeigt die Anordnung der Injektorbox in dem Wandpanel 7 des Obergefäßes in der Ansicht A der Fig. 1. Es wird die Ausbildung des Dachteils 9 als Dachpanel deutlich. Die Injektorbox wird als komplette Einheit in das Wandpanel 7 eingebaut. Wandpanel 7 und Injektorbox werden gemeinsam in den Wasserverteiler 6 des Obergefäßes 5 eingehängt.

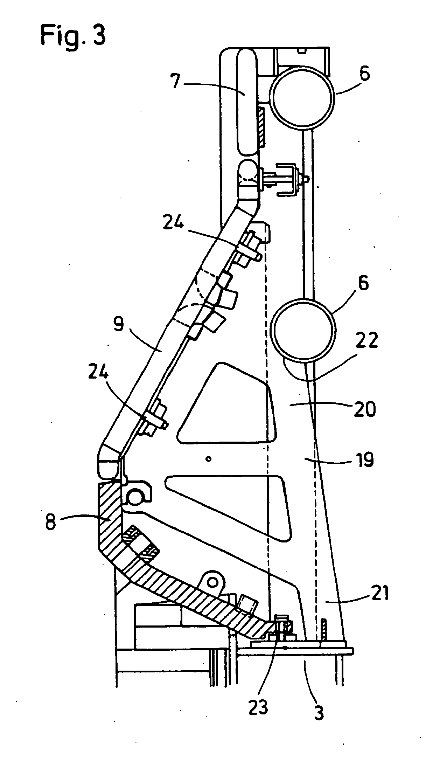

Mit Hilfe der Fig. 3 wird die Tragkonstruktion 19 gezeigt, mit deren Hilfe die Injektorbox in den Wasserverteiler 6 des Obergefäßes eingehängt wird. Die Tragkonstruktion 19 umfasst zwei in den Ofen ragende parallel beabstandete Bleche 20, die untereinander mittels zwei horizontal verlaufenden Blechen (nicht gezeigt) versteift sind. Die seitlichen Bleche 20 bzw. Füße 21 der Bleche sind am Untergefäß 3 des Ofens angeschweißt. Die Tragkonstruktions-Bleche 20 sind mit entsprechenden Ausnehmungen 22 an die horizontalen Rohre des Wasserverteilers 6 gesteckt und verschweißt. Das Bodenteil 8 ist zum einen an dem Untergefäß 3 über eine lösbare Bolzenverbindung 23 und zum anderen an der Tragkonstruktion 19 befestigt. Das Dachteil 9 wird über Keilverbindungen 24 mit der Tragkonstruktion 19 verbunden. Die Seitenwände der l'njektorbox sind über Schraubverbindungen an den Seitenblechen 20 der Tragkonstruktion befestigt.

Mittels dieser Tragkonstruktion wird erreicht, dass die Bauteile der Injektorbox jeweils separat voneinander auswechselbar sind, ohne die gesamte Injektorbox austauschen zu müssen.

### Bezugszeichenliste:

- 1: Aufnahmevorrichtung oder Injektorbox
- 2: Ofenwand
- 3: Untergefäß
- 4: Feuerfest-Auskleidung
- 5: Obergefäß
- 6: Wasserverteiler Obergefäß
- 7: Wandpanel
- 8: Bodenteil
- 9: Dachteil
- 10: Seitenwand
- 11: Seitenwand
- 12: Rohre des Dachteils
- 13: verstärkter Plattenbereich des Bodenteils
- 14: Durchlassöffnung bzw. Aufnahme für Injektor
- 15: Durchlassöffnung bzw. Aufnahme für Injektor
- 16: Sauerstoff-Injektor
- 17: Kohlenstoff-Injektor
- 18: Injektorkopf
- 19: Tragkonstruktion für die Injektorbox
- 20: Seitenbleche der Tragkonstruktion
- 21: Füße der Seitenbleche
- 22: Ausnehmungen der Seitenbleche
- 23: Bolzenverbindung
- 24: Keilverbindung

## Patentansprüche

1. Vorrichtung (1) zur Aufnahme mindestens eines Injektors (15, 16), mit dem Medien, wie Sauerstoff und/oder kohlenhaltige Brennstoffe, in einen Schmelzofen, insbesondere einen Elektrolichtbogenofen, eingebracht werden, wobei mittels der Aufnahmevorrichtung (1) der jeweilige Injektor (15, 16) geschützt an oder in der Ofenwand (2) des Schmelzofens angeordnet ist,
**dadurch gekennzeichnet,**
**dass** diese Aufnahmevorrichtung (1) mehrteilig ausgebildet ist mit einem unteren Bodenteil (8), einem oberen Dachteil (9) und Seitenwänden (10, 11), die separat voneinander auswechselbar sind.

2. Vorrichtung nach Anspruch 1,
**dadurch gekennzeichnet,**
**dass** das Bodenteil (8) aus einer massiven Kupferplatte gefertigt ist.

3. Vorrichtung nach Anspruch 1 oder 2,
**dadurch gekennzeichnet,**
**dass** die Seitenwände (10, 11) aus massiven Kupferplatten oder Stahlplatten gefertigt sind.

4. Vorrichtung nach einem der Ansprüche 1 bis 3,
**dadurch gekennzeichnet,**
**dass** das Dachteil (9) als Dachpanel oder als Platte ausgebildet ist.

5. Vorrichtung nach Anspruch 4,
**dadurch gekennzeichnet,**
**dass** das Dachpanel als Rohr-an-Rohr-Konstruktion aus Stahl mit zur Ofenwand geneigt und in Richtung Ofenmitte verlaufenden Rohren (12) ausgebildet ist.

6. Vorrichtung nach einem der Ansprüche 1 bis 5,
**dadurch gekennzeichnet,**
**dass** das Bodenteil (8) und/oder das Dachteil (9) und/oder die Seitenwände (10, 11) gekühlt, insbesondere wassergekühlt, sind.

7. Vorrichtung nach Anspruch 6,
**dadurch gekennzeichnet,**
**dass** dem Bodenteil (8), dem Dachteil (9) und den Seitenwänden (10, 11) separate Kühlkreisläufe zugeordnet sind.

8. Vorrichtung nach einem der Ansprüche 1 bis 7,
**dadurch gekennzeichnet,**
**dass** das untere Bodenteil (8), das obere Dachteil (9) und die Seitenwände (10, 11) lösbar an einer gemeinsamen Tragkonstruktion (19) befestigt sind, die am Obergefäß (5) angeordnet ist.

9. Vorrichtung nach Anspruch 8,
**dadurch gekennzeichnet,**
**dass** das Dachteil (9) über mindestens eine Keilverbindung (24) mit der Tragkonstruktion (19) verbunden ist.

10. Vorrichtung nach einem der Ansprüche 4 bis 7,
**dadurch gekennzeichnet,**
**dass** das Dachteil (9) seitlich über die Seitenwände als Schutz vor Beschädigungen übersteht.

11. Vorrichtung nach einem der Ansprüche 1 bis 10,
**dadurch gekennzeichnet,**
**dass** in dem Bodenteil (8) eine Durchlassöffnung (14, 15) für den jeweiligen Injektor (16, 17) vorgesehen ist und darin der jeweilige Injektor (16, 17) so positioniert ist, dass der Injektorkopf (18) nicht aus dem Bodenteil (8) herausragt.

## Claims

1. Device (1) for mounting at least one injector (15, 16), by which media such as oxygen and/or carbonaceous fuels are introduced into a smelting furnace, particularly an electric arc furnace, wherein the respective injector (15, 16) is arranged to be protected at or in the furnace wall (2) of the smelting furnace by means of the mounting device, **characterised in that** this mounting device (1) is of multi-part construction with a lower base part (8), an upper roof part (9) and side walls (10, 11), which are exchangeable separately from one another.

2. Device according to claim 1, **characterised in that** the base part (8) is made of a solid copper plate.

3. Device according to claim 1 or 2, **characterised in that** the side walls (10, 11) are made of solid copper plates or steel plates.

4. Device according to any one of claims 1 to 3, **characterised in that** the roof part (9) is constructed as a roof panel or as a plate.

5. Device according to claim 4, **characterised in that** the roof panel is constructed as a tube-on-tube construction of steel with tubes (12) inclined relative to the furnace wall and extending in the direction of the furnace centre.

6. Device according to any one of claims 1 to 5, **characterised in that** the base part (8) and/or the roof part (9) and/or the side walls (10, 11) is or are cooled, particularly water-cooled.

7. Device according to claim 6, **characterised in that** separate cooling circuits are associated with the base part (8), the roof part (9) and the side walls (10, 11).

8. Device according to any one of claims 1 to 7, **characterised in that** the lower base part (8), the upper roof part (9) and the side walls (10, 11) are detachably fastened to a common support construction (19) arranged at the upper vessel (5).

9. Device according to claim 8, **characterised in that** the roof part (9) is connected with the support construction (19) by way of at least one wedge connection (24).

10. Device according to any one of claims 4 to 7, **characterised in that** the roof part (9) protrudes laterally beyond the side walls as protection against damage.

11. Device according to any one of claims 1 to 10, **characterised in that** a passage opening (14, 15) for the respective injector (16, 17) is provided in the base part (8) and the respective injector (16, 17) is so positioned therein that the injector head (18) does not protrude from the base part (8).

## Revendications

1. Dispositif (1) pour la réception d'au moins un injecteur (15, 16) au moyen duquel des produits, comme de l'oxygène et/ou des combustibles contenant du carbone, sont introduits dans un four de fusion, en particulier dans un four à arc électrique, tel que l'injecteur respectif (15, 16) et agencé de façon protégée contre ou dans la paroi (2) du four de fusion au moyen du dispositif de réception (1),
**caractérisé en ce que** le dispositif de réception (1) est réalisé en plusieurs pièces avec une partie de fond inférieure (8), une partie de toiture supérieure (9) et des parois latérales (10, 11), qui sont interchangeables séparément les unes des autres.

2. Dispositif selon la revendication 1,
**caractérisé en ce que** la partie de fond (8) est fabriquée à partir d'une plaque massive en cuivre.

3. Dispositif selon la revendication 1 ou 2,
**caractérisé en ce que** les parois latérales (10, 11) sont fabriquées à partir de plaques massives en cuivre ou de plaques massives en acier.

4. Dispositif selon l'une des revendications 1 à 3,
**caractérisé en ce que** la partie de toiture (9) est réalisée sous forme de panneau de toiture ou sous forme de plaque.

5. Dispositif selon la revendication 4,
**caractérisé en ce que** le panneau de toiture est réalisé comme une construction tube-sur-tube en acier avec des tubes (12) qui s'étendent de façon inclinée par rapport à la paroi du four et en direction du milieu du four.

6. Dispositif selon l'une des revendications 1 à 5,
**caractérisé en ce que** la partie de fond (8) et/ou la partie de toiture (9) et/ou les parois latérales (10, 11) sont refroidies, en particulier refroidies à l'eau.

7. Dispositif selon la revendication 6,
**caractérisé en ce que** des circuits de refroidissement séparés sont associés à la partie de fond (8), à la partie de toiture (9) et aux parois latérales (10, 11).

8. Dispositif selon l'une des revendications 1 à 4,
**caractérisé en ce que** la partie de fond inférieure (8), la partie de toiture supérieure (9) et les parois latérales (10, 11) sont fixées de façon détachable sur une construction porteuse commune (19), qui est agencée sur le récipient supérieur (5).

9. Dispositif selon la revendication 8,
**caractérisé en ce que** la partie de toiture (9) est reliée à la construction porteuse (19) via au moins une liaison à coin (24).

10. Dispositif selon l'une des revendications 4 à 7,
**caractérisé en ce que** la partie de toiture (9) dépasse latéralement au-delà des parois latérales à titre de protection vis-à-vis des endommagements.

11. Dispositif selon l'une des revendications 1 à 10,
**caractérisé en ce qu'**une ouverture traversante (14, 15) est prévue dans la partie de fond (8) pour l'injecteur respectif (16, 17), et l'injecteur respectif (16, 17) est positionné dans cette ouverture de telle façon que la tête d'injecteur (18) ne dépasse pas de la partie de fond (8).
